# EUROPÄISCHE PATENTSCHRIFT

(11) **EP 3 685 344 B1**
(45) Veröffentlichungstag und Bekanntmachung des Hinweises auf die Patenterteilung: **23.04.2025**
(21) Anmeldenummer: 18782876.9
(22) Anmeldetag: 12.09.2018
(51) Int. Cl.: G06Q 10/08

(54) **DATENTECHNISCHES SYSTEM ZUR ORGANISATION VON ARBEITSABLÄUFEN BEI DEM DIE ZUSAMMENARBEIT VON MENSCHEN UND MASCHINEN BEI OPTIMALER SCHUTZWIRKUNG DER BETEILIGTEN MENSCHEN INTRALOGISTISCH GESTEUERT WIRD UND VERFAHREN ZU DESSEN INSTALLATION.**
DATA SYSTEM FOR ORGANISING WORKFLOWS, IN WHICH THE COOPERATION OF HUMAN BEINGS AND MACHINES IS CONTROLLED INTRA-LOGISTICALLY WITH OPTIMUM PROTECTION FOR THE HUMAN BEINGS INVOLVED, AND METHOD FOR INSTALLATION THEREOF.
SYSTÈME TECHNIQUE DE TRAITEMENT DE DONNÉES POUR L'ORGANISATION DE PHASES DE TRAVAIL AVEC LEQUEL LA COOPÉRATION DE PERSONNES ET DE MACHINES EN CAS D'EFFET OPTIMAL DE PROTECTION DES PERSONNES PARTICIPANTES EST COMMANDÉE DE MANIÈRE INTRALOGISTIQUE ET SON PROCÉDÉ D'INSTALLATION

(30) Priorität: 20.09.2017 DE 102017008866
(43) Veröffentlichungstag der Anmeldung: 29.07.2020
(73) Patentinhaber: Grenzebach Maschinenbau GmbH, 86663 Asbach-Baeumenheim (DE)
(72) Erfinder: MARB, Philipp, 86641 Rain (DE); HERRE, Erwin, 86675 Buchdorf (DE)
(74) Vertreter: Page, White & Farrer Germany LLP
(86) Internationale Anmeldenummer: PCT/DE2018/000261
(87) Internationale Veröffentlichungsnummer: WO 2019/057228

(56) Entgegenhaltungen:
- WO-A1-2013/119942
- STEFAN SCHWARZER: "Entwicklung eines industriellen Funkortungssystems basierend auf der kohärenten Kombination von Kommunikationssignalen mit IEEE-802.15.4-Geräten", 12 September 2011 (2011-09-12), pages 1 - 195, XP093163863, Retrieved from the Internet <URL:https://dokumente.ub.tu-clausthal.de/servlets/MCRFileNodeServlet/import_derivate_00000124/db110714.pdf>
- INTRALOGISTIK: "Drohnen in Lager und Produktion - Intralogistik", 27 April 2017 (2017-04-27), XP055522129, Retrieved from the Internet <URL:https://intralogistik.tips/drohnen-in-lager-und-produktion/> [retrieved on 20181108]
- OLAF GÖRING: "Funktechniken für die Industrie 4.0 - Innovative Funksysteme sollen die intelligente Produktion weiter voranbringen", NET ZEITSCHRIFT FÜR KOMMUNIKATIONSMANAGEMENT,, vol. 69, no. 7/8, 1 January 2015 (2015-01-01), pages 26 - 28, XP001596350
- ANONYMOUS: "Fahrerloses Transportfahrzeug - Wikipedia", 16 October 2014 (2014-10-16), XP055241849, Retrieved from the Internet <URL:https://de.wikipedia.org/w/index.php?title=Fahrerloses_Transportfahrzeug&oldid=134952234#Navigation_mittels_Umgebungsmerkmalen> [retrieved on 20160115]
- VDI: "VDI 2510 Fahrerlose Transportsysteme (FTS)", 1 October 2005 (2005-10-01), pages 39pp, XP009509336, Retrieved from the Internet <URL:https://www.vdi.de/uploads/tx_vdirili/pdf/9616158.pdf> [retrieved on 20181116]

## Beschreibung

Die Erfindung betrifft ein Datentechnisches System zur Organisation von Arbeitsabläufen bei dem die Zusammenarbeit von Menschen und Maschinen bei optimaler Schutzwirkung der beteiligten Menschen intralogistisch gesteuert wird und ein Verfahren zu dessen Installation.

Seit den Anfängen des Einsatzes von mechanischen Hilfsmitteln zur Erleichterung der menschlichen Arbeit mit dem Einsatz von fremder Energie ist es ein zunehmend wichtiges Problem bei dem Einsatz der genutzten Fremdenergie die Sicherheit der am Produktionsprozess beteiligten Menschen nicht zu gefährden. Seit jedoch die Anwendung der elektronischen Datenverarbeitung während der Produktion von mechanischen Bauteilen oder bei der Organisation von Ereignissen immer mehr in den Vordergrund rückt sind die sicherheitstechnischen Anforderungen in Bezug auf die menschliche Beteiligung zunehmend in den Bereich der Gefährdung menschlicher Unversehrtheit gerückt. Dies wird zum Beispiel durch den kriegstechnischen Einsatz von Drohnen oder den zivilen Einsatz von Assistenzsystemen bei der Steuerung von Autos und deren Anfälligkeit bei der Auswertung von Umwelteinflüssen deutlich.

Zum Stand der Technik wird aus der Patentliteratur auf das Dokument DE 10 2015 010 402 A1 verwiesen, das das Betreiben eines fahrerlosen Transportfahrzeugs betrifft.

Diesem Dokument liegt die Zielsetzung zugrunde, die Effizienz eines fahrerlosen Transportsystems zu steigern.

Im Patentanspruch 1 dieses Dokuments wird ein Verfahren zum Betreiben eines ersten fahrerlosen Transportfahrzeugs (FTF1) und zweiten fahrerlosen Transportfahrzeugs (FTF2) beansprucht bei dem das Anfordern eines Auftrags (A1) von einer Datenbasis durch das erste fahrerlose Transportfahrzeug (FTF1) und das Übertragen des Auftrags von der Datenbasis zu dem ersten fahrerlosen Transportfahrzeug (FTF1) erfolgt, das dadurch gekennzeichnet ist , dass das Erfassen eines Ereignisses, das für das erste fahrerlose Transportfahrzeug (FTF1) eine höhere Priorität hat als der Auftrag (A1), durch das erste fahrerlose Transportfahrzeug (FTF1 ) und Übertragen des Auftrags (A1) an das zweite fahrerlose Transportfahrzeug (FTF2) in Abhängigkeit von dem Erfassen des Ereignisses erfolgt.

Aus dem Dokument DE 10 2007 026 399 B3 ist ein zonenorientiertes Sicherheitskonzept für unabhängige Transportsysteme bekannt, dem die Zielsetzung zugrunde liegt, ein Sicherheitskonzept anzugeben, das zonenorientiert arbeitet und nicht kostspielig ist.

Im Patentanspruch 1 wird hierzu ein Verfahren zum selektiven Stillsetzen von führerlosen Transportsystemen (6) innerhalb eines von einer Vielzahl führerlosen Transportsystemen (6) befahrenen Bereichs (2) mit einer Vielzahl von

Produktionsstätten (8) und/oder Bearbeitungseinheiten (10) bei einer Auslösung wenigstens eines von mehreren in diesem Bereich (2) angeordneten NOT - AUS -Schaltern (12) beansprucht, mit folgenden Verfahrensschritten:
a) sicherheitsgerichtete Übermittlung der Betätigung eines NOT - AUS - Schalters (12) und einer Information eines zugehörigen Schutzraums (14) an alle den Bereich (2) befahrenden führerlosen Transportsysteme (6),
b) transportsystemautarke Bestimmung jeweils einer Position eines jeden führerlosen Transportsystems (6) innerhalb eines Bereichs (2),
c) transportsystembezogener Vergleich seiner bestimmten Position mit einem zum betätigten NOT - AUS - Schalter (12) gehörenden Schutzraum (14), und
d) autarkes Stillsetzen eines führerlosen Transportsystems (6), dessen Positionsbestimmung in den zum betätigten NOT - AUS - Schalter (12) gehörenden Schutzraum (14) fällt.

Aus der den Oberbegriff des Patentanspruchs 1 bildenden Druckschrift WO 2013/119942 A1 ist ein datentechnisches System zur Organisation von Arbeitsabläufen bekannt, bei dem die Zusammenarbeit von Menschen und Maschinen bei optimaler Schutzwirkung der beteiligten Menschen intralogistisch gesteuert wird, mit den folgenden Merkmalen: a) ein intralogistisch relevanter Arbeitsbereich ist in Produktions- oder Lagerbereiche unterteilt, die mittels Transportbereiche für die am Arbeitsvorgang beteiligten Menschen und Maschinen ohne Hindernisse zugänglich sind, wobei die Transportbereiche mittels zweckmäßig verteilten Funk-Teilnehmern als Sender und Empfänger lückenlos datentechnisch erreichbar sind und ein intralogistisches Prozessmanager-System die übergeordnete Steuerung übernimmt, b) für die Abwicklung der anfallenden Transportaufgaben sind zahlreiche fahrerlose Transportsysteme verschiedener Ausgestaltungen und Hersteller-eigenen Steuerungs-Untersysteme einsetzbar, c) für die Ausführung anfallender Arbeiten werden Roboter verschiedener Ausgestaltungen und Hersteller-eigenen Steuerungs-Untersysteme eingesetzt.

Aus der Literaturstelle Intralogistik: "Drohnen in Lager und Produktion-Intralogistik", 27. 4.2017, XP055522129, ist die Verwendung von Drohnen insbesondere für Hochregallager bekannt, wobei zur Vermeidung von Kollisionen mit Menschen die Drohnen in höheren Zonen oberhalb der Menschen eingesetzt werden.

Ferner ist aus der Literaturstelle Olaf Göring: "Funktechniken für die Industrie 4.0 - Innovative Funksysteme sollen intelligente Produktion weiter voranbringen", NEZ Zeitschrift für Kommunikationsmanagement, Bd. 69, Nr. 7/8, 1. Januar 2015, Seiten 26-28, XP001596350, der Einsatz von neuen Funksystemen zur Lokalisierung von Werkstücken und/oder Mitarbeitern bekannt, wobei neben WLAN, Bluetooth, GSM/GPRS und RFID insbesondere HiFlecs als neuer Funkstandard vorgeschlagen wird.

In der weiteren Literaturstelle Anonymous: "Fahrerloses Transportfahrzeug-Wikipedia", 16. Oktober 2014, XP055241849, ist die Problematik der Positionsbestimmung bei fahrerlosen Transportfahrzeugen anhand von verschiedenen Navigationsverfahren (Koppelnavigation, Leitlinie, Lasernavigation, Rasternavigation, Navigation mittels Markierungen, usw.) beschrieben.

Schließlich sind aus der Literaturstelle VDI:"VDI2510 Fahrerlose Transportsysteme (FTS)", VDI-Richtlinien, VDI, DE, 1. Oktober 2005, Seite 39pp, XP009509336, (D5) weitere Verfahren zur Positionsbestimmung in fahrerlosen Transportsystemen beschrieben, wie z.B. Lagekopplung, Leitlinienführung, Markierungsführung. Der vorliegenden Erfindung liegt die Aufgabe zugrunde, eine Vorrichtung und ein Verfahren anzugeben, mit dem die Möglichkeit geschaffen wird, ein datentechnisches System zur Organisation von Arbeitsabläufen zu schaffen, bei dem die Zusammenarbeit von Menschen und Maschinen bei optimaler Schutzwirkung der beteiligten Menschen intralogistisch gesteuert wird.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 5 gelöst.

In den Unteransprüchen sind weitere vorteilhafte Ausgestaltungen der Erfindung gekennzeichnet.

Assistent (28) jeweils einen Sensor (25) zur Erfassung von 360 - Grad
- Ansichten und einen Sensor (31) zur Erfassung von Greif Funktionen aufweisen.
und dem Verfahren gemäß dem Patentanspruch 6.

Verfahren zur Errichtung eines datentechnischen Systems zur Organisation von Arbeitsabläufen bei dem die Zusammenarbeit von Menschen und Maschinen bei optimaler Schutzwirkung der beteiligten Menschen intralogistisch gesteuert wird, mit den folgenden Verfahrensmerkmalen:
a) ein intralogistisch relevanter Arbeitsbereich wird in Produktions - oder Lagerbereiche (1) unterteilt die mittels Transportbereiche (7) für die am Arbeitsvorgang beteiligten Menschen und Maschinen ohne Hindernisse zugänglich sind, wobei die Transportbereiche (7) mittels zweckmäßig verteilten Sendern und Empfängern (6) lückenlos datentechnisch erreichbar sind und ein intralogistisches Prozessmanger - System die übergeordnete Steuerung übernimmt,
b) für die Abwicklung der anfallenden Transportaufgaben werden zahlreiche FTS (fahrerlose Transportsysteme) verschiedener Ausgestaltungen und Hersteller - eigenen Steuerungs - Untersysteme neben Transportdrohnen (9) eingesetzt,,
c) für die Ausführung anfallender Arbeiten werden neben, mit Wlan - Geräten ausgestatteten, Personen (2) Roboter verschiedener Ausgestaltungen und Hersteller - eigenen Steuerungs - Untersysteme eingesetzt und außerdem beansprucht wird der intralogistisch relevante Arbeitsbereich zur Orientierung aller datentechnisch zu erreichenden Funktionsträger mit bei Bedarf zusätzlich zweckmäßig verteilte Orientierungsmarker und Abgleichmarker 20 aufweist. Und
ein Computerprogramm mit einem Programmcode zur Durchführung der Verfahrensschritte, wenn das Programm in einem Computer ausgeführt wird und Maschinenlesbarer Träger mit dem Programmcode eines Computerprogramms zur Durchführung des Verfahrens , wenn das Programm in einem Computer ausgeführt wird.

Die Erfindung wird im Folgenden näher beschrieben.

Es zeigen im Einzelnen:
Fig.1: eine Übersicht über den Einflussbereich eines intralogistischen Prozessbereichs
Fig.2: Einzelheiten eines intralogistischen Prozessbereichs
Fig.3: Interaktionen eines intralogistischen Prozessbereichs
Fig.4: Beispielhafter Arbeitsbereich innerhalb eines intralogistischen Prozessbereichs

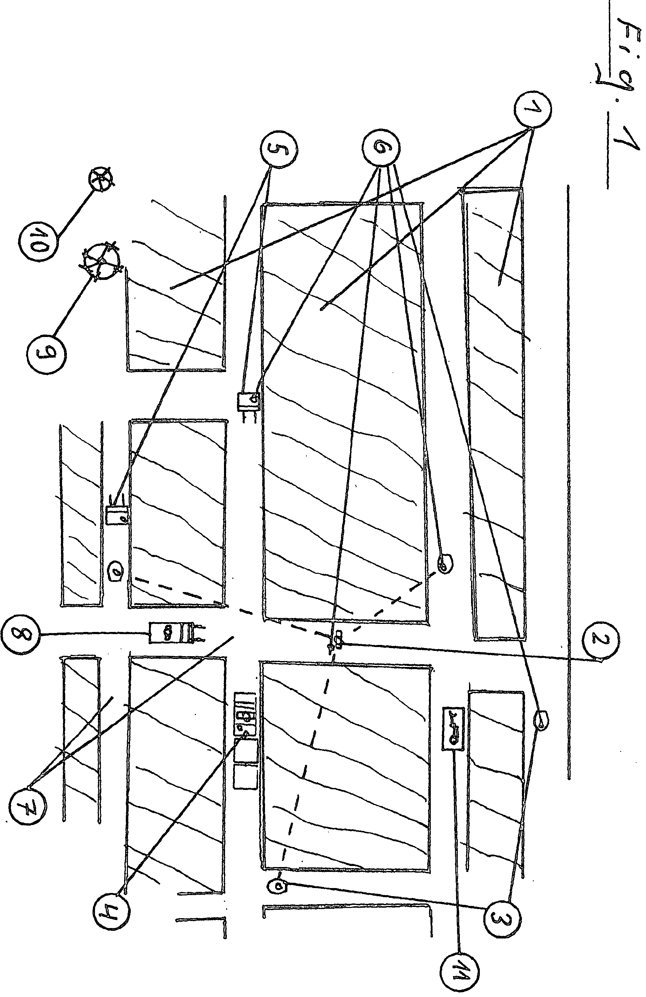

Die Fig.1: zeigt eine Übersicht über den Einflussbereich eines intralogistischen Prozessbereichs.

Als intralogistischer Arbeitsbereich können jede Art von Produktionsbereichen und/oder Lagerbereichen oder Kommissionsbereichen angesehen werden. So wird ein solcher Bereich in der Fig.1 mit 1 bezeichnet. In einem solchen intralogistischen Arbeitsbereich können zum Beispiel unterschiedliche Personen 2 erscheinen die mit einem Funkgerät , z.B.ein WLan-Gerät ausgestattet sind, wobei hier jede Art von technischem Gerät infrage kommt, das mittels einer Funk - Verbindung datentechnisch mit dem Gesamtsystem verbunden ist. Weiter sind in der Fig.1 so genannte FTS ( fahrerlose Transportsysteme ) gezeigt, die ebenfalls datentechnisch mit dem Gesamtsystem verbunden sind. Als weiteres Beispiel eines im intralogistischen Arbeitsbereich vorkommenden datentechnisch relevanten Teilnehmers ist mit 4 ein Elektro - Zug mit einem Fahrer bezeichnet. Auch autonom fahrende Gabelstapler 5 können in dem gezeigten intralogistischen Arbeitsbereich der Fig.1 am Warenverkehr teilnehmen. Zum Betrieb der aufgezeigten Verkehrsteilnehmer sind beispielhaft vier verschiedene WLan - Sender 6 im Gesamtbild gezeigt. Zwischen verschiedenen Produktions - oder Lagerbereichen sind Transport - Gassen 7 für den Warenverkehr bzw. den Produktionsablauf erforderlich. Auch Gabelstapler 8 mit Fahrer sind im intralogistischen Gesamt - Netzwerk datentechnisch zu berücksichtigen.Darüber hinaus ist auch der Luftraum zu beachten in dem nicht nur für den Warenverkehr benötigte Transport - Drohnen 9 sondern auch Überwachungs - Drohnen 10 datentechnisch gezielt mit Informationen zu versorgen sind.

Mit 11 ist in der Fig.1 zudem ein FTS bezeichnet das einen Roboter trägt, wobei ein solches FTS von dem Prozess - Manager gesteuert wird.

Die Voraussetzung für das erfindungsgemäße datentechnische System ist die Lokalisierung aller beteiligten Menschen und Maschinen innerhalb der intralogistisch relevanten Arbeitsbereiche mittels der Signallaufzeiten von elektromagnetischen Wellen, wie zum Beispiel WLan. Die exakte Positionsbestimmung von Menschen und Maschinen deren Position noch nicht bekannt ist erfolgt dezentral und relativ anhand eines Berechnungs - Algorithmus in Relation zu Netz - Teilnehmern die ihrerseits ihre exakte Position bereits bestimmt haben.

Mit Hilfe der Nutzung der Position von einzelnen fahrerlosen Transportfahrzeugen aus deren eigenen Lokalisierungssystemen kann eine eigene Funkortung durchgeführt werden. Aus diesem Grund kann zum Beispiel auf, extra in der Halle vermessene, Access - Points, wie sonst benötigt, verzichtet werden. Zudem kann jeder Funkteilnehmer zum Beispiel eine Datenbrille dadurch seine Position bestimmen. Die Fahrer/innen von Flurförderfahrzeugen oder Fahrzeugen anderer fahrerlosen Transportsystemen können dann anhand dieser Funkteilnehmer im Bereich des oben beschriebenen Funknetzes lokalisiert werden. Dadurch können auch Zusatzinformationen erfasst werden.

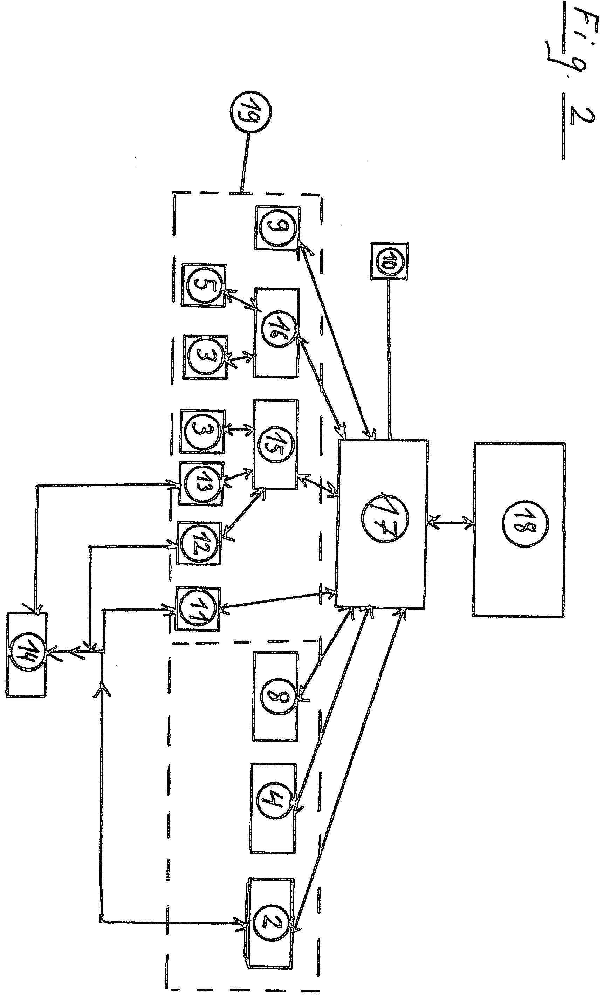

Die Fig.2: zeigt Einzelheiten eines intralogistischen Prozessbereichs.

In dieser Fig.2 ist als ein Teil des gesamten Systems 18 zur Waren - Wirtschaft und/oder Waren - Herstellung das intralogistische Manager - System 17 als zentrale Bezugsstelle zuerkennen.

Im rechten Teil der Fig.2 sind hier die Personen 2 mit einem Wlan - Gerät, der Elektro - Zug 4 mit Fahrer und der Gabelstapler 8 mit Fahrer gewissermaßen als menschliche Bestandteile des intralogistischen Manager - Systems 17 herausgezeichnet.

Auf der linken Seite der Fig.2 sind dagegen die Transportdrohnen 9, die Hersteller - eigenen FTS mit ihrem Untersystem A und die Hersteller - eignen FTS mit ihrem Untersystem B zeichnerisch organisatorisch zusammen gefasst. Hierbei sind im Untersystem A FTS 3 zum Transport und FTS 13 zum Transport von Montage - Plattformen und im Untersystem B FTS 3 zum Transport , autonom fahrende Gabelstapler 5 und FTS 12 mit einem Roboter die von einem Untersystem gesteuert sind, organisatorische zusammen gefasst. Die FTS 11 mit einem Roboter , die vom Prozess - Manager gesteuert sind, sind organisatorisch separat im intralogistischen Manager - System 17 behandelt, ebenso wie die Überwachungs - Drohnen 10. Eine selbsttätig bewegbare Montage - Plattform 14 kann selbsttätig mit den FTS 11,12 und13 und mit den Personen 2 die ein Wlan - Gerät besitzen in Datenverkehr treten. Besonders ist darauf geachtet, dass die Personen 2, die ein Wlan - Gerät besitzen, mit den FTS, die vom Prozess - Manager gesteuert werden und der selbsttätig bewegbaren Montage - Plattform 14 eine datentechnisch kurze Verbindung haben.

Der gesamte Kooperations - Bereich zur Waren - Wirtschaft und zur Waren - Herstellung ist mit 19 bezeichnet.

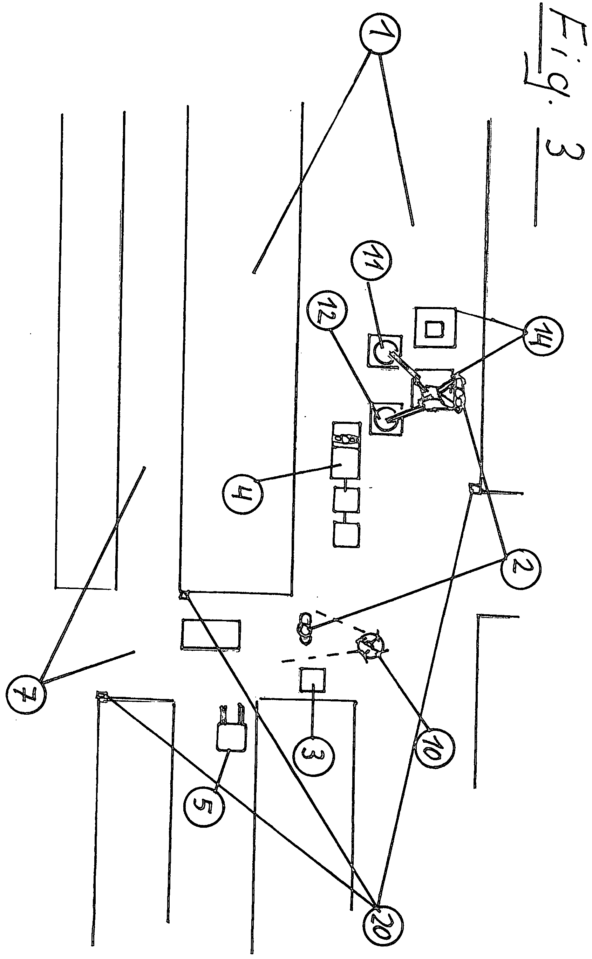

Die Fig.3: zeigt Interaktionen eines intralogistischen Prozessbereichs.

Mit 1 sind hier Produktions - und Lagerbereiche wie in der Fig.1 bezeichnet, wobei diese Bereiche mittels Transport - Gassen 7 abgetrennt sind. In der oben links gezeigten Transportbereich 7 ist beispielhaft ein Elektro - Zug 4 mit einem Fahrer zu sehen wobei sich in unmittelbarer Nähe zwei Personen 2 mit einem Wlan - Gerät und ein FTS 3 zum Transport in unmittelbarer Nähe einer Überwachungs - Drohne 10 befinden. In dem nächsten Transportbereich 7 ist ein autonom fahrender Gabelstapler 5 gezeigt. In dem zuerst genannten Transportbereich 7 sind ferner zwei selbsttätig bewegbare Montage - Plattformen 14 neben einem FTS 11 und einem FTS 12 zu erkennen. Im Erfassungsbereich der genannten Transport - Gassen sind Orientierungs - Marker und Abgleich - Marker 20 für FTS und andere Funktionsträger wie Drohnen und Personen als Sicherheitsbackup verteilt dargestellt.

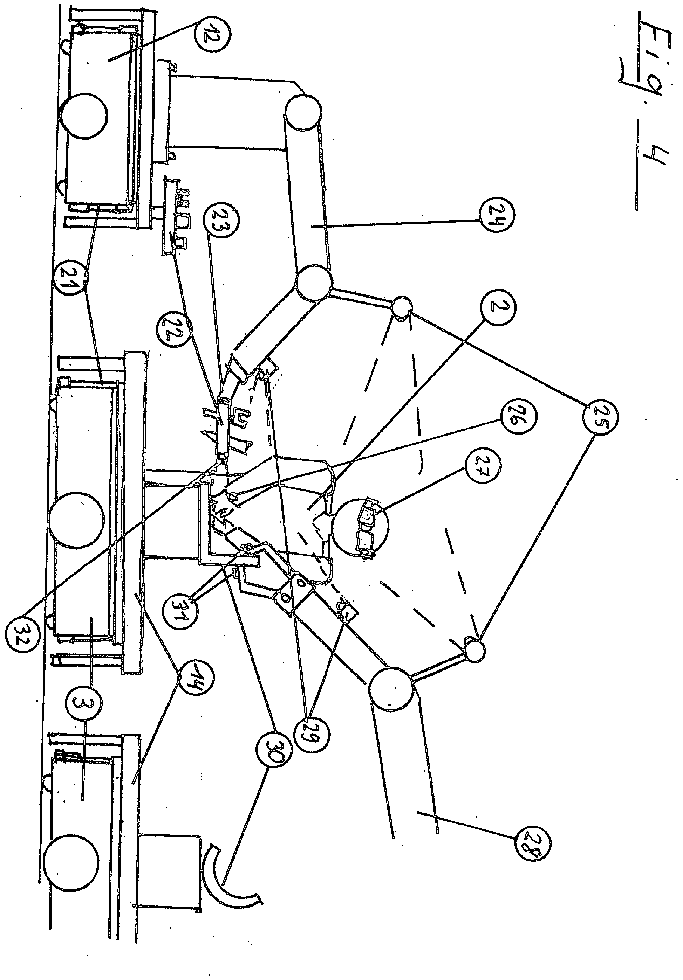

In der Fig.4:ist ein beispielhafter Arbeitsbereich innerhalb eines intralogistischen Prozessbereichs gezeigt.

Im Mittelpunkt der Fig.4 ist ein menschlicher Arbeiter, eine Person 2 mit einem Wlan - Gerät , mit einer Datenbrille 27 mit Kamera zu sehen der an seinem Handgelenk einen Sensor 26 zur Messung des Haut - Widerstands 26 an seiner arbeitenden Hand trägt. Mit einem solchen Sensor 26 kann sofort erkannt werden, wenn der Arbeiter nervös wird, Unsicherheiten im Produktions - Prozess verursachen kann und deshalb möglichst bald ausgetauscht werden sollte. Am Boden des Arbeitsbereichs sind zwei hintereinander aufgefahrene FTS 3 neben einem FTS 12 mit einem Roboter, von einem Untersystem gesteuert, zu erkennen, wobei das FTS 12 mittels, der vom Laser - Scan - Sensors 21 generierten Daten z.B.Abstand,Geschwindigkeit , mit dem neben ihm aufgefahrenen FTS 3 kommuniziert wo bei die beiden FTS 3 jeweils selbsttätig bewegbare Montage - Plattformen 14 aufweisen. Der unmittelbar vor der Person 2 liegende Arbeitsbereich mit einem gezeigten Produkt 30 wird mittels eines Roboters 24 als Werkzeug - Assistent auf der linken Seite über einen Werkzeug - Wechsler 23, der sich aus einer Werkzeug -Bar 22 bedient, und einem Sensor 32 zur Überwachung der Menschen - Hände bedient. Auf der rechten Seite der Person 2 wird mittels eines Roboter - Assistenten 28 und einem Sensor 31 zur Überwachung von Greif - Funktionen der Produktions - Prozess überwacht.

Beide Roboter 24 und 28 weisen in ihrem Arbeitsbereich jeweils einen Sensor 25 zur Erfassung von 360 - Grad - Ansichten und einen Sensor 29 zur Überwachung von Greif - Funktionen auf.

### Bezugszeichenliste

- 1: Produktions - oder Lagerbereiche
- 2: Person mit einem Funkgerät
- 3: FTS ( fahrerloses Transportsystem ,Fahrzeug) zum Transport
- 4: Elektro - Zug mit Fahrer
- 5: Autonom fahrender Gabelstapler
- 6: Sender und Empfänger ( z.B.WLan-Gerät)
- 7: Transportbereiche (Gasse)
- 8: Gabelstapler mit Fahrer
- 9: Transport - Drohne
- 10: Überwachungs - Drohne
- 11: FTS mit einem Roboter , vom Prozess - Manager gesteuert
- 12: FTS mit einem Roboter, von einem Untersystem gesteuert
- 13: FTS zum Transport von Montage - Plattformen
- 14: selbsttätig bewegbare Montage - Plattform
- 15: Untersystem A ( Hersteller - eigenes Steuersystem für FTS )
- 16: Untersystem B ( Hersteller - eigenes Steuersystem für FTS )
- 17: Intralogistisches Manager - System
- 18: System zur Waren - Wirtschaft und Waren - Herstellung
- 19: Kooperations - Bereich der Transport - und Werkzeug - Medien
- 20: Orientierungs - Marker und Abgleich - Marker (z.B. für FTS)
- 21: Laser - Scan - Sensor
- 22: Werkzeug - Bar
- 23: Werkzeug - Wechsler
- 24: Roboter als Werkzeug - Assistent
- 25: Sensor zur Erfassung von 360 - Grad - Ansichten
- 26: Sensor zur Messung des Haut - Widerstandes
- 27: Datenbrille mit Kamera
- 28: Roboter - Assistent zur Produkt - Fixierung und Produkt - Umladung
- 29: Sensor mit Laser - Scanner als Überwachung von Greif - Funktionen
- 30: Produkt
- 31: Sensor zur Überwachung von Greif - Funktionen
- 32: Sensor zur Überwachung von Menschen - Händen

## Patentansprüche

1. Datentechnisches System zur Organisation von Arbeitsabläufen bei dem die Zusammenarbeit von Menschen und Maschinen bei optimaler Schutzwirkung der beteiligten Menschen intralogistisch gesteuert wird, mit den folgenden Merkmalen:
a) ein intralogistisch relevanter Arbeitsbereich ist in Produktions- oder Lagerbereiche (1) unterteilt, die mittels Transportbereiche (7) für die am Arbeitsvorgang beteiligten Menschen und Maschinen ohne Hindernisse zugänglich sind, wobei die Transportbereiche (7) mittels zweckmäßig verteilten Funk-Teilnehmern als Sender und Empfänger (6) lückenlos datentechnisch erreichbar sind und ein intralogistisches Prozessmanager-System die übergeordnete Steuerung übernimmt,
b) für die Abwicklung der anfallenden Transportaufgaben sind zahlreiche fahrerlose Transportsysteme verschiedener Ausgestaltungen und Hersteller-eigenen Steuerungs-Untersysteme einsetzbar,
c) für die Ausführung anfallender Arbeiten werden Roboter verschiedener Ausgestaltungen und Hersteller-eigenen Steuerungs-Untersysteme eingesetzt,
**dadurch gekennzeichnet, dass**
für die Abwicklung der anfallenden Transportaufgaben ferner Transportdrohnen (9) einsetzbar sind, für die Ausführung anfallender Arbeiten ferner Personen (2) eingesetzt werden, die mit Funkgeräten ausgestattet sind,
wobei eine Lokalisierung von beteiligten Menschen und Maschinen, deren Position innerhalb des intralogistisch relevanten Arbeitsbereiches noch nicht bekannt ist, mittels der Signallaufzeiten von elektromagnetischen Wellen dezentral und in Relation zu Netz-Teilnehmern, die ihrerseits ihre exakte Position bereits bestimmt haben, unter Verzicht auf extra vermessene Access-Points erfolgt, und zwar mit Hilfe der Nutzung der Position von einzelnen fahrerlosen Transportfahrzeugen (3), aus deren eigenen Lokalisierungssystemen eine eigene Funkortung durchgeführt wird.

2. Datentechnisches System nach Anspruch 1, **dadurch gekennzeichnet,**
**dass** der intralogistisch relevante Arbeitsbereich bei Bedarf zusätzlich zur Orientierung aller datentechnisch zu erreichenden Funktionsträger zweckmäßig verteilte Orientierungsmarker und Abgleichmarker (20) aufweist.

3. Datentechnisches System nach Anspruch 1 oder 2, **dadurch gekennzeichnet,**
**dass** menschliche Arbeiter in ihrer Arbeit von einem Roboter (24) als Werkzeug-Assistent und/oder einem Roboter-Assistent (28) unterstützt werden.

4. Datentechnisches System nach einem der vorhergehenden Ansprüche, **dadurch gekennzeichnet,**
**dass** ein Roboter (24) und/oder ein Roboter-Assistent (28) jeweils einen Sensor (25) zur Erfassung von 360-Grad-Ansichten und einen Sensor (31) zur Erfassung von Greif-Funktionen aufweisen.

5. Verfahren zur Errichtung eines datentechnischen Systems zur Organisation von Arbeitsabläufen bei dem die Zusammenarbeit von Menschen und Maschinen bei optimaler Schutzwirkung der beteiligten Menschen intralogistisch gesteuert wird, mit den folgenden Verfahrensmerkmalen:
a) ein intralogistisch relevanter Arbeitsbereich wird in Produktions- oder Lagerbereiche (1) unterteilt, die mittels Transportbereiche (7) für die am Arbeitsvorgang beteiligten Menschen und Maschinen ohne Hindernisse zugänglich sind, wobei die Transportbereiche (7) mittels zweckmäßig verteilten Sendern und Empfängern (6) lückenlos datentechnisch erreichbar sind und ein intralogistisches Prozessmanager-System die übergeordnete Steuerung übernimmt,
b) für die Abwicklung der anfallenden Transportaufgaben werden zahlreiche fahrerlose Transportsysteme verschiedener Ausgestaltungen und Hersteller-eigenen Steuerungs-Untersysteme neben Transportdrohnen (9) eingesetzt,
c) für die Ausführung anfallender Arbeiten werden neben, mit WLAN-Geräten ausgestatteten, Personen (2) Roboter verschiedener Ausgestaltungen und Hersteller-eigenen Steuerungs-Untersysteme eingesetzt,
wobei eine Lokalisierung von beteiligten Menschen und Maschinen, deren Position innerhalb des intralogistisch relevanten Arbeitsbereiches noch nicht bekannt ist, mittels der Signallaufzeiten von elektromagnetischen Wellen dezentral und in Relation zu Netz-Teilnehmern, die ihrerseits ihre exakte Position bereits bestimmt haben, unter Verzicht auf extra vermessene Access-Points erfolgt, und zwar mit Hilfe der Nutzung der Position von einzelnen fahrerlosen Transportfahrzeugen (3), aus deren eigenen Lokalisierungssystemen eine eigene Funkortung durchgeführt wird.

6. Verfahren nach Anspruch 5,
**dadurch gekennzeichnet,**
**dass** der intralogistisch relevante Arbeitsbereich zur Orientierung aller datentechnisch zu erreichenden Funktionsträger mit zusätzlich zweckmäßig verteilten Orientierungsmarkern und Abgleichmarkern (20) versehen ist.

7. Computerprogramm mit einem Programmcode zur Durchführung der Verfahrensschritte nach einem der Ansprüche 5 oder 6, wenn das Programm in einem Computer ausgeführt wird.

8. Maschinenlesbarer Träger mit dem Programmcode eines Computerprogramms zur Durchführung des Verfahrens nach einem der Ansprüche 5 oder 6, wenn das Programm in einem Computer ausgeführt wird.

## Claims

1. Data technical system for organizing workflows in which the collaboration of humans and machines is intralogistically controlled with optimal protective effect for the involved humans, with the following features:
a) An intralogistically relevant work area is divided into production or storage areas (1), which are accessible without obstacles via transport areas (7) for the humans and machines involved in the work process, wherein the transport areas (7) are seamlessly data-technically accessible via appropriately distributed radio participants as transmitters and receivers (6), and an intralogistic process manager system takes over the overall control,
b) Numerous driverless transport systems of various designs and manufacturer-specific control subsystems can be used for handling the transport tasks,
c) Robots of various designs and manufacturer-specific control subsystems are used for performing the tasks,
**characterized in that**
for handling the transport tasks transport drones (9) are used,
for performing the tasks humans (2) equipped with radios are also used,
wherein the localization of involved humans and machines, whose position within the intralogistically relevant work area is not yet known, is carried out decentrally and in relation to network participants, who have already determined their exact position, using the signal propagation times of electromagnetic waves, without the need for extra surveyed access points, and with the help of the position of individual driverless transport vehicles (3), from whose own localization systems a separate radio localization is carried out.

2. Data technical system according to claim 1, **characterized in that** the intralogistically relevant work area additionally has appropriately distributed orientation markers and alignment markers (20) for the orientation of all data-technically accessible function carriers.

3. Data technical system according to claim 1 or 2, **characterized in that** human workers are supported in their work by a robot (24) as a tool assistant and/or a robot assistant (28).

4. Data technical system according to one of the preceding claims, **characterized in that** a robot (24) and/or a robot assistant (28) each have a sensor (25) for capturing 360-degree views and a sensor (31) for capturing gripping functions.

5. Method for establishing a data technical system for organizing workflows in which the collaboration of humans and machines is intralogistically controlled with optimal protective effect for the involved humans, with the following method features:
a) An intralogistically relevant work area is divided into production or storage areas (1), which are accessible without obstacles via transport areas (7) for the humans and machines involved in the work process, wherein the transport areas (7) are seamlessly data-technically accessible via appropriately distributed transmitters and receivers (6), and an intralogistic process manager system takes over the overall control,
b) Numerous driverless transport systems of various designs and manufacturer-specific control subsystems, along with transport drones (9), are used for handling the transport tasks,
c) For performing the tasks, humans (2) equipped with WLAN devices, along with robots of various designs and manufacturer-specific control subsystems, are used,
wherein the localization of involved humans and machines, whose position within the intralogistically relevant work area is not yet known, is carried out decentrally and in relation to network participants, who have already determined their exact position, using the signal propagation times of electromagnetic waves, without the need for extra surveyed access points, and with the help of the position of individual driverless transport vehicles (3), from whose own localization systems a separate radio localization is carried out.

6. Method according to claim 5, **characterized in that** the intralogistically relevant work area is provided with additionally appropriately distributed orientation markers and alignment markers (20) for the orientation of all data-technically accessible function carriers.

7. Computer program with a program code for performing the method steps according to one of claims 5 or 6, when the program is executed on a computer.

8. Machine-readable carrier with the program code of a computer program for performing the method according to one of claims 5 or 6, when the program is executed on a computer.

## Revendications

1. Système technique de données destiné à l'organisation d'opérations de travail et dans lequel la coopération entre individus et machines est contrôlée de manière intralogistique tout en assurant un effet protecteur optimal des individus impliqués, le système ayant les caractéristiques suivantes :
a) une zone de travail pertinente d'un point de vue intralogistique est subdivisée en zones de production ou de stockage (1) qui sont accessibles sans obstacles, par le biais de zones de transport (7), aux individus et machines impliqués dans le processus de travail, dans lequel les zones de transport (7) sont entièrement atteignables d'un point de vue technique de données par le biais de participants-radio en tant qu'émetteurs et récepteurs (6) répartis de manière adéquate, et dans lequel un système gestionnaire de processus intralogistique prend en charge le contrôle supérieur ;
b) de nombreux systèmes de transport sans conducteur de différentes conceptions et de sous-systèmes de contrôle propres au(x) fabricant(s) peuvent être utilisés pour effectuer des tâches de transport à venir ;
c) des robots de différentes conceptions et de sous-systèmes de contrôle propres au(x) fabricant(s) sont utilisés pour exécuter des travaux à venir,
**caractérisé en ce que** :
des drones de transport (9) peuvent être en outre utilisés pour effectuer des tâches de transport à venir ;
des personnes (2) équipées d'appareils radio sont en outre utilisées pour exécuter des travaux à venir,
dans lequel une localisation d'individus et machines impliqués, dont la position au sein de la zone de travail pertinente d'un point de vue intralogistique n'est pas encore connue, est effectuée, par le biais des temps de propagation de signaux d'ondes électromagnétiques, d'une manière décentralisée et en relation avec des participants-réseaux qui de leur côté ont déjà déterminé leur position exacte, en renonçant à des points d'accès mesurés supplémentaires, et une propre radiolocalisation est effectuée au moyen de l'utilisation de la position des véhicules de transport sans conducteur individuels (3) déterminée à partir de leurs propres systèmes de localisation.

2. Système technique de données selon la revendication 1, **caractérisé en ce que** :
la zone de travail pertinente d'un point de vue intralogistique comporte, si nécessaire, en plus de l'orientation de tous les supports de fonction à atteindre d'un point de vue technique de données, des repères d'orientation et des repères d'alignement (20) répartis de manière adéquate.

3. Système technique de données selon la revendication 1 ou 2, **caractérisé en ce que** :
des travailleurs humains sont assistés dans leur travail par un robot (24) en tant qu'assistantoutillage et/ou par un assistant-robot (28).

4. Système technique de données selon l'une quelconque des revendications précédentes, **caractérisé en ce que** :
un robot (24) et/ou un assistant-robot (28) comprennent chacun un capteur (25) pour saisir des vues à 360 degrés, et un capteur (31) pour saisir des fonctions de préhension.

5. Procédé pour la mise en place d'un système de technique de données destiné à l'organisation d'opérations de travail et dans lequel la coopération entre individus et machines est contrôlée de manière intralogistique tout en assurant un effet protecteur optimal des individus impliqués, le procédé ayant les caractéristiques suivantes :
a) une zone de travail pertinente d'un point de vue intralogistique est subdivisée en zones de production ou de stockage (1) qui sont accessibles sans obstacles, par le biais de zones de transport (7), aux individus et machines impliqués dans le processus de travail, dans lequel les zones de transport (7) sont entièrement atteignables d'un point de vue technique de données par le biais de participants-radio en tant qu'émetteurs et récepteurs (6) répartis de manière adéquate, et dans lequel un système gestionnaire de processus intralogistique prend en charge le contrôle supérieur ;
b) de nombreux systèmes de transport sans conducteur de différentes conceptions et de sous-systèmes de contrôle propres au(x) fabricant(s) peuvent être utilisés pour effectuer des tâches de transport à venir ;
c) des robots de différentes conceptions et de sous-systèmes de contrôle propres au(x) fabricant(s) sont utilisés pour exécuter des travaux à venir,
dans lequel une localisation d'individus et de machines impliqués, dont la position au sein de la zone de travail pertinente d'un point de vue intralogistique n'est pas encore connue, est effectuée, par le biais des temps de propagation de signaux d'ondes électromagnétiques, d'une manière décentralisée et en relation avec des participants-réseaux qui de leur côté ont déjà déterminé leur position exacte, en renonçant à des points d'accès mesurés supplémentaires, et une propre radiolocalisation est effectuée au moyen de l'utilisation de la position des véhicules de transport sans conducteur individuels (3) déterminée à partir de leurs propres systèmes de localisation.

6. Procédé selon la revendication 5, **caractérisé en ce que** :
la zone de travail pertinente d'un point de vue intralogistique est prévue, à des fins d'orientation de tous les supports de fonction à atteindre d'un point de vue technique de données, avec en outre des repères d'orientation et des repères d'alignement (20) répartis de manière adéquate.

7. Programme informatique avec un code de programme destiné à effectuer les étapes du procédé selon l'une des revendications 5 et 6 lorsque le programme est exécuté par un ordinateur.

8. Support lisible par machine avec un code de programme d'un programme informatique destiné à mettre en œuvre le procédé selon l'une des revendications 5 et 6 lorsque le programme est exécuté par un ordinateur.
